# EUROPEAN PATENT SPECIFICATION

(11) **EP 2 594 512 B1**
(45) Date of publication and mention of the grant of the patent: **20.04.2016**
(21) Application number: 12192035.9
(22) Date of filing: 09.11.2012
(51) Int. Cl.: B65C 7/00, B65G 47/64, B65G 47/71, B65G 15/14

(54) **CONVEYOR SYSTEM**
FÖRDERANLAGE
INSTALLATION DE CONVOYAGE

(30) Priority: 18.11.2011 IT BO20110655
(43) Date of publication of application: 22.05.2013
(73) Proprietor: Cosmopack S.r.l., 41100 Modena (IT)
(72) Inventor: Campagnoli, Roberto, 40134 Bologna (IT); Lacinio, Salvatore, 40050 Montesanpietro (IT)
(74) Representative: Gustorf, Gerhard

(56) References cited:
- EP-A1- 0 163 330
- EP-A1- 0 842 875
- EP-A1- 1 439 140
- EP-A1- 2 266 900
- EP-A2- 1 245 512

## Description

### Field of the invention

-The present invention concerns a conveyor system according to the preamble of claim 1, particularly suitable for its use in the technical field of the distribution-machines of automatic type for distributing articles for the subsequent packaging operations.

### Background of the invention

-At present, with reference to the European patent No. EP-1.439.140.A1 it is known a conveyor system in a distribution-machine of the automatic type.

-In said known distribution-machine, the distribution means comprise at least one pair of longitudinally extendable and retractable conveyors with conveyor belts, which have corresponding conveying branches positioned parallel to each other, facing each other, and spaced apart from each other, to form an active conveying and distribution section having an extendable and retractable outlet opening with respect to the inlet opening.

-Said pair of longitudinally extendable and retractable conveyors execute very well their function but each single extendable and retractable conveyor requires hard-working and it is very expensive to realize and requires expensive maintenance costs, as well.

Similar systems are known from EP 1 245 512 A2 that refers to a device for gripping containers aligned in single file and for feeding them to a plurality of parallel pathways, from EP 163 330 A1 disclosing a device for spacing bottles, or from EP 2 266 900 A1 relating to a product grouping device. In EP 842 875 A1 an oriented bottle conveyor is described.

### Brief Summary of the invention

-The object of the present invention is therefore that to overcome the drawbacks described above. The solution of this object results from the features of claim 1. Furhter characteristics are disclosed in the dependent claims.

### Brief Description of the Figures

-The characteristics and advantages of the invention will be made clearer by the following description of some preferred practical embodiments, provided here purely by way of example and without restrictive intent, with reference to the attached figures, in which:
- Figure 1 is a schematic top view of a distribution machine including the conveyor system object of the present invention;
- Figure 2 is a schematic top view and in a enlarged form of the conveyor system according to the invention;
- Figure 2A is a schematic view similar to figure 2 in a different operative configuration;
- Figure 3 is a front schematic view of the system of figure 2;

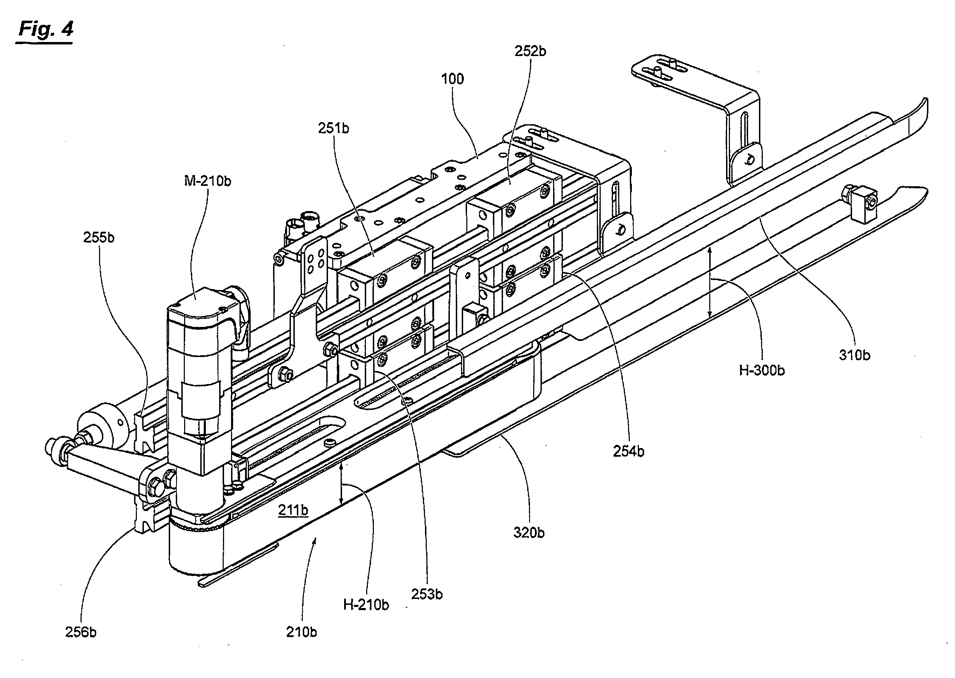

- Figure 4 is a view of the system with some parts removed for better illustrating others parts of the system.

### Description by way of example of the System

-With reference to the following description, the contents of the above mentioned EP-1.439.140.A1 are expressly referred to in relation to the present invention.

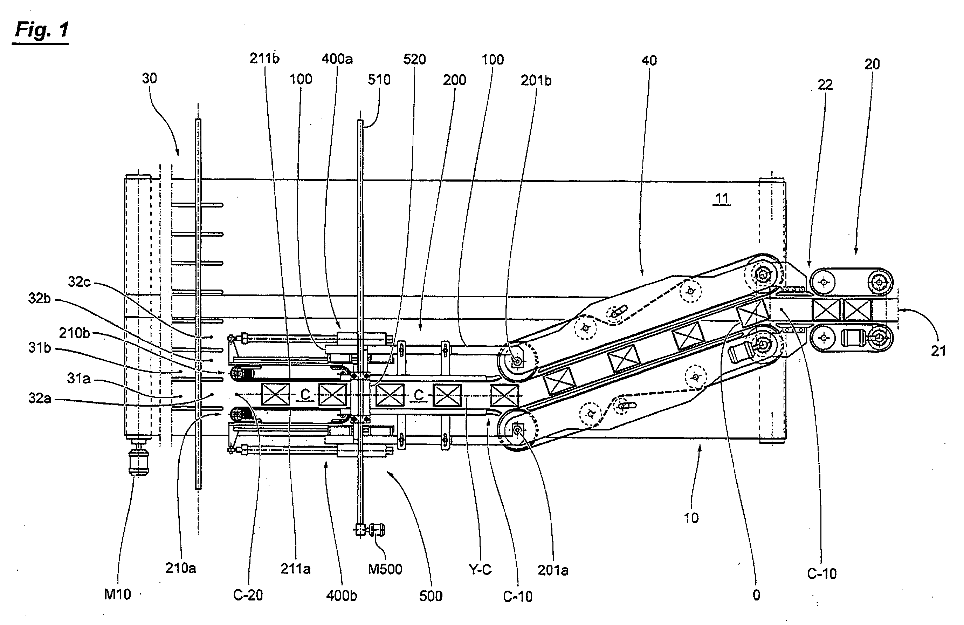

-With reference to figure 1, the distribution machine comprises: _>underlying conveyor means **10**, extending longitudinally and driven by a motor **M10**, in which said conveyor means **10** are able to form an underlying transport belt **11** to support and to translate the articles; _>a first line **20** for supplying articles, positioned upstream and comprising a single article-supply channel **21** having an outlet opening **22**; _>a second line **30** for receiving articles with a plurality of channels **31a, 31b, 31c, etc.,** positioned downstream and having a plurality of inlet openings **32a, 32b, 32c, etc.**; _>-conveyor means **40-200**, positioned between said first line **20** and said second line **30** for receiving articles, in which said conveyor means **40-200** are able to form a transport channel, in which said transport channel is able to receive the articles arriving from said outlet opening **22** of the first supply line **20** and to distribute said articles, in selectively manner, into the inlet openings **32a, 32b, 32c, etc.** of said second receiving line **30**.

-With reference to said conveyor means **40-200**, they comprise a first conveyor_system, **40**, positioned upstream, and a second conveyor_system, **200**, positioned downstream, in which said two conveyors, **40** and **200**, are connected together in an articulated manner **201a, 201b**, in such way to configure a longitudinal conveyor channel.

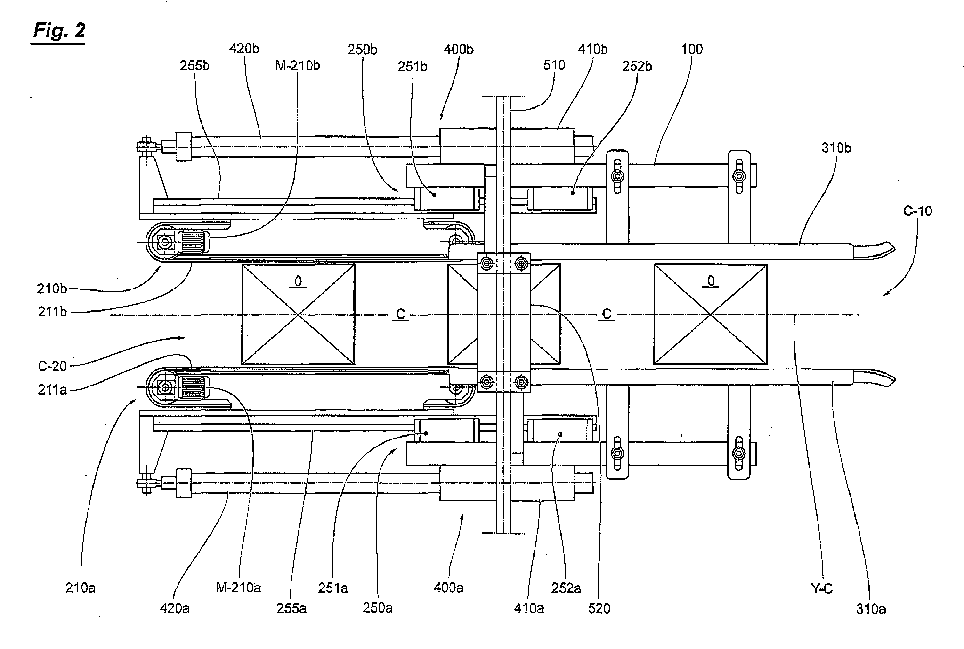

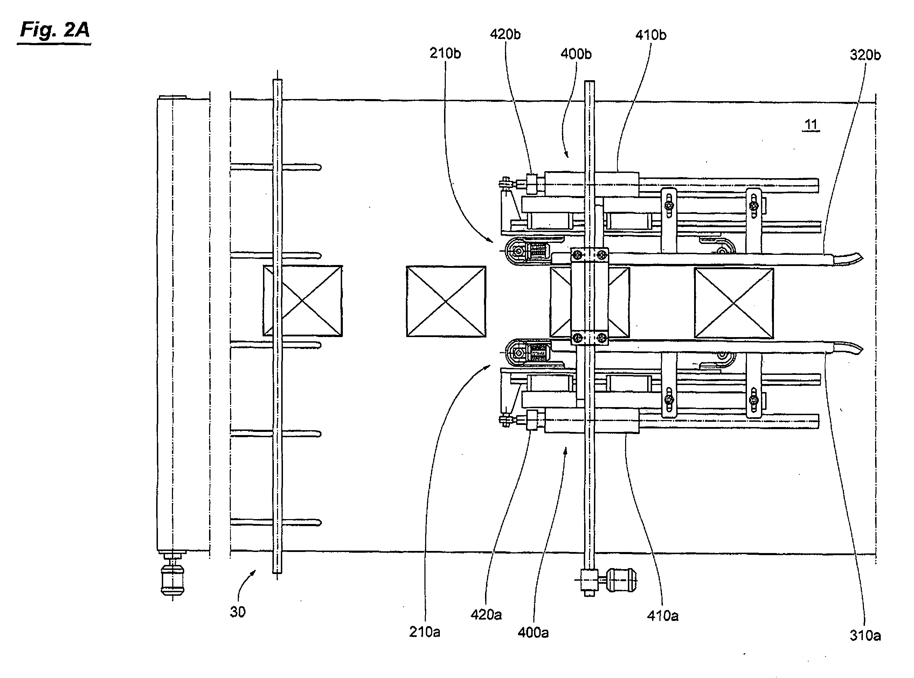

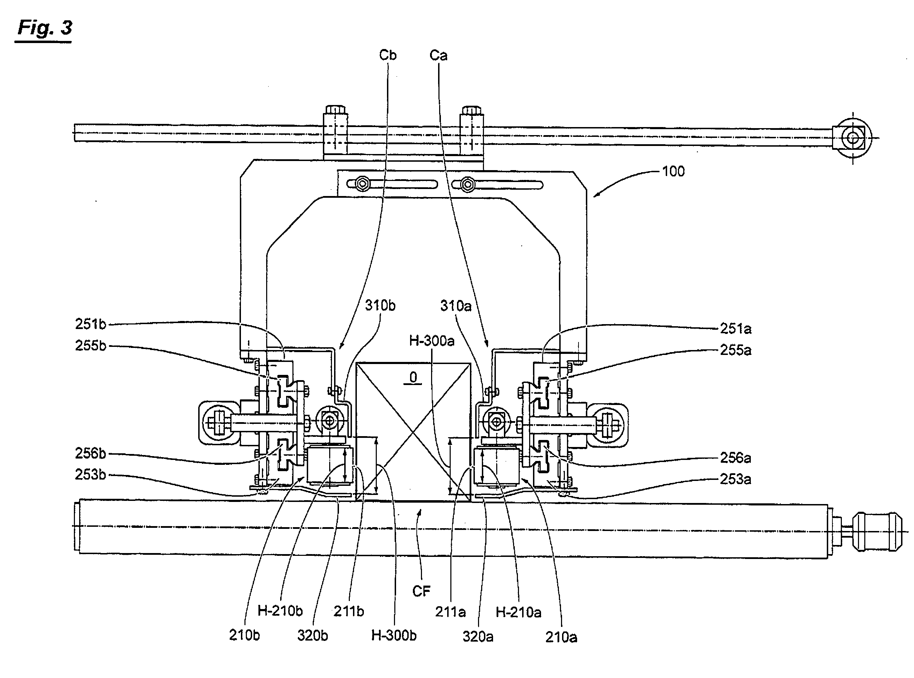

-With reference to figs. 1, 2, 2A, 3 e 4, the second conveyor_system **200** is able to configure a conveyor channel **C** which extends along a longitudinal axis **Y-C**, in which, as better explained below, see in particular fig. 3, said channel **C** comprises a first longitudinal vertical side wall **Ca**, a second longitudinal vertical side wall **Cb**, and a lower wall **Cf.**

-The channel **C** configures a first inlet opening **C-10** and a second outlet opening **C-20**, in which, as better explained below, the outlet opening **C-20** of said channel **C** is extendable and retractable with respect to the inlet opening **C-10** of the channel **C**.

-Said conveyor_system **200** substantially comprises: **_>-**a support frame **100**; **_>-**a first conveyor **210a** with conveyor belt **211a**, **_>-**a second conveyor **210b** with conveyor belt **211b**; **_>-**longitudinal guide means **310a-320a, 310b-320b.**

-With reference to the first conveyor **210a** with conveyor belt **211a,** it is supported by said frame **100** in a longitudinally movable manner with respect to the frame **100**, and said first conveyor **210a** has a branch positioned to configure a first active conveying longitudinal vertical wall for said conveying channel **C**.

-With reference to said second conveyor **210b** with conveyor belt **211b**, it is supported by said frame **100** in a longitudinally movable manner with respect to the frame **100**, and said second conveyor **210b** has a branch positioned to configure a second active conveying longitudinal vertical wall for said conveying channel **C.**

-With reference to the longitudinal guide means **310a-320a** and **310b-320b**, they are supported by said frame **100** and longitudinally extend with respect to said channel **C**.

-Furthermore, the conveyor_system **200** can further comprise translator means, **400a, 400b**, in which said translator means **400a** and **400b** are able to longitudinally move said first **210a** and said second **210b** conveyor with respect to the frame **100**.

-With said structure, in order to longitudinally move the outlet opening **C-20** (away from or draw near) with respect to the frame **100**, said first and said second conveyors **210a** and **210b** are longitudinally **Y** moved with respect to said frame **100**.

-In the illustrated embodiment, the conveyor-system **200** comprises a first motor **M-210a** able to drive said first conveyor **210a** and a second motor **M-210b** able to drive said second conveyor **210b**.

-As above described, said first conveyor **210a** and said second conveyor **210b** are supported by said frame **100** in a longitudinally movable manner, preferably by longitudinal sliding coupling means **250a-250b**, in which said longitudinal sliding coupling means **250a-250b** comprise a first longitudinal sliding coupling **250a** to support in longitudinally sliding manner said first conveyor **210a** and a second longitudinal sliding coupling means **250b** to support in longitudinally sliding manner said second conveyor **210b**.

-Each of said sliding coupling means **250a** and **250b** comprise respective guide-elements **251a**_**252a**_**253a**_**254a** and **251b**_**252b**_**253b**_**254b**, fixed to the frame **100**, and respective sliding rods, **255a**_**256a** and **255b**_**256b**, on which the conveyors, **210a** and **210b**, are fixed, and said rods, **255a**_**256a** and **255b**_**256b**, are supported in a cantilevered manner by said guide-elements **251a_252a_253a_254a** and **251b**_**252b**_**253b**_**254b**.

-With reference to said guide means **310a**_**320a** and **310b**_**320b**, preferably, they comprise a first couple of longitudinal guides **310a** and **320a** extending longitudinally along the first vertical side wall of the conveyor channel **C**, and a second couple of longitudinal guides **310b** and **320b** extending longitudinally along the second vertical side wall of the conveyor channel **C**, in which said guides are supported by the frame **100.**

-With reference to figure 3, said first couple of longitudinal guides **310a**_**320a** and/or said second couple of longitudinal guides **310b**_**320b** are transversally (vertically) spaced among them of a determind dimension, **H-300a** and **H-300b**, with the purpose to configure a longitudinal opening between them, in which into this longitudinal opening the respective branch of transport, **211a** and **211b** of a respective conveyor **210a** and **210b** can slide, in which said branches, **211a** and **211b**, have a height **H-201** and **H-210b** which is lesser in comparison with the distance-height **H-300a** and **H-300b** disposed between the respective couple of guides **310a_320a** and **310b**_**320b**.

-With reference to the translator means **400a** and **400b** they comprise a first linear actuator **400a** which has its base **410a** associated with the frame **100** and its stem **420a** associated with the first guides **255a**_**256a** in which these latter support and move the first conveyor **210a**, and a second linear actuator **400b**, which has its base **410b** associated with the frame **100** and its stem **420b** associated with the second guides **255b**_**256b**, in which these latter support and move the second conveyor **210b**.

-With reference to the distribution machine it further comprises translator means **500** to transversally move said frame **100**, as for example a helicoidal coupling screw_nut.screw comprising a transversal threaded rod **510** and a support_element with nut.screw fixed to the frame **100**, in which said threaded rod **510** is fixed to the frame of the machine, and in which a motor **M500** provides to rotate said threaded-rod **510** with the purpose to transversally move the support_element **520** and therefore the frame **100**, by planning desired transversal movements for the outlet opening **C20**.

-Furthermore, said distribution-machine comprises an underlying transport means **10**, as, for example, a transport belt comprising one or more belts, in which said transport belt **11** extends longitudinally and moves longitudinally along its longitudinal axis, in which said transport belt **11** is able to configure the lower wall **Cf** of said channel **C**.

-Again with reference to said distribution-machine, it furthermore comprises a control unit (cpu, plc, pc, other), not illustrated and able to control the single functional means and, more in particular, with reference to the reasons better explained below, able to control the two motors **M**_**210a** and **M**_**210b**, the two linear actuators **400a** and **400b**, the motor **M10**, the motor **M500** which preferably are so called brushless servo-motors.

### Preferred Operation

-With reference to the above described structural description and with reference to the figures, it is clear: _>-that by controlling the two motors **M_210a** and **M**_**210b** of the respective conveyors **210a** and **210b** with respective belts **211 a** and **211b** it is possible to know and/or to set and/or to vary the speed of linear advancement for said transport belts **211a** and **211b**; _>-that by controlling the two linear actuators **400a** and **400b** it is possible to know and/or to set and/or to vary the direction of the linear longitudinal movement for the two conveyors **210a** and **210b**, as well as to know and/or to set and/or to vary the speed of longitudinal linear movement for the two conveyors **210a** and **210b** and, therefore, also the longitudinal movement for the relative outlet opening **C-20**; _>-that by controlling the motor **M10** is is possible to know and/or to set and/or to vary the speed of linear advancement of the transport belt **11**; _>-that by controlling the motor **M500** it is possible to know and/or to set and/or to vary the direction of the transversal linear movement of the frame 100 which supports the two conveyors **210a** and **210b**, as well as to know and/or to set and/or to vary the speed of transversal linear movement of the two conveyors **210a** and **210b** and, therefore, also the transversal movement of the outlet opening **C-20**.

-With such structuring, therefore, it is possible to know and/or to set and/or to vary the speed of the transport belts **211a** and **211b** in relationship with the longitudinal movement direction and in relationship with the longitudinal movement speed planned for two conveyors **210a** and **210b**.

-Preferably, with the purpose to optimize the transport and the distribution of the articles, during the longitudinal movement (towards upsteam or downstream) of the two conveyors **210a** and **210b** and, therefore, of the outlet opening **C-20**, the linear longitudinal speed of the transport belts **211a** and **211b** is varied according to the longitudinal movements (towards upsteam or towards downstream) of the two conveyors **210a** and **210b**, in which, substantially, said speed is varied so that the longitudinal advancement speed of the transport belts **211a** and **211b** is equal with respect to linear longitudinal advancement speed of the transport plane **11**

-As an example, with the above system, it is possible to execute a modus operandi in which: **_>-**a speed **Va**_**11** regarding the longitudinal linear advancement is set for the transport belt **11**; **_>-**a speed **Va_C20** regarding the longitudinal linear movement is set for the conveyors **210a** and **210b** and therefore for the relative outlet opening **C20**; _>-a speed **Va**_**211** regarding the the longitudinal linear movement is set for the two transport belts **211a** and **211b**; _>-in which **Va_11** is substantially equal to the algebraic sum of **Va**_**C20**+**Va**_**211**, in such way to be obviated a longitudinal relative movements between the underlying transport belt 11 and the transport belts **211a** and **211b,** and in this manner optimizing the transport of the articles disposed along the channel **C.**

-In fact, by this modus operandi, the articles **O** are correctly advanced, without relative movements between the articles and the conveyor belts **211a** and **211b**, without longitudinal relative movements between the article and the transport belt **11** and, therefore, during said transport and advancement, the articles **O** maintain the feed pitch planned upstream and in this manner is executed a correct distribution of the same articles when released downstream by the outlet opening **C-20**.

-Again in such context, it is also to be noted that the transversal relative movements between the articles **O** and the belt **11** do not cause an incorrect advancement towards downstream of the articles, because, substantially, said transversal relative movements are executed maintaining the positive longitudinal advancement of the articles **O** by the transport belt **11** and by the side transport belts **211a** and **211b**, maintaining therefore a correct and continuous longitudinal advancement for the articles **O.**

## Claims

1. Conveyor-system provided with a support frame (100) and configuring a conveyor channel (C) which extends along a longitudinal axis (Y-C), and which configures a first longitudinal vertical side wall and a second longitudinal vertical side wall, and which configures a first inlet opening (C-10) and a second outlet opening (C-20), which is movable longitudinally with respect to the inlet opening (C-10) of the channel (C), **characterized by** the fact that it comprises:
- a first conveyor (210a) with conveyor belt (211 a), which first conveyor (210a) is supported by said frame (100) in a longitudinally movable manner with respect to the frame (100), said first conveyor (210a) having a branch positioned to configure a first active conveying longitudinal vertical wall for said conveying channel (C),
- a second conveyor (210b) with conveyor belt (211b), which second conveyor (210b) is supported by said frame (100) in a longitudinally movable manner with respect to the frame (100), said second conveyor (210b) having a branch positioned to configure a second active conveying longitudinal vertical wall for said conveying channel (C),
- longitudinal guide means (310a-320a, 310b-320b) supported by said frame (100), and which longitudinally extend with respect to said channel (C),
- translator means (400a, 400b), which are able to longitudinally move said first and said second conveyors (210a, 210b) with respect to the frame (100),
and **characterized by** the fact that said translator means (400a, 400b) comprise:
- a first linear actuator (400a) able to move longitudinally said first conveyor (210a);
- a second actuator (400b) able to move longitudinally said second conveyor (210b),
- wherein said first linear actuator (400a) has its base (410a) associated with the frame (100) and its stem (420a) associated with the first conveyor (210a), and
- wherein said second linear actuator (400b) has its base (410b) associated with the frame (100) and its stem (420b) associated with the second conveyor (210b).

2. System according to claim 1, **characterized by** the fact that in order to longitudinally move the outlet opening (C-20) with respect to the frame (100) said first and said second conveyors (210a, 210b) are longitudinally moved with respect to said frame (100).

3. System according to claim 1 or 2, **characterized by** the fact that it comprises a first motor (M-210a) able to drive said first conveyor (210a) and a second motor (M-210b) able to drive said second conveyor (210b).

4. System according to any of the preceding claims, **characterized by** the fact that said first conveyor (210a) and said second conveyor (210b) are supported by said frame (100) in a longitudinally movable manner by longitudinal sliding coupling means (250a, 250b).

5. System according to claim 4, **characterized by** the fact that said longitudinal sliding coupling means (250a, 250b) comprise:
- a first longitudinal sliding coupling means (250a) able to support in longitudinally sliding manner said first conveyor (210a),
- and a second longitudinal sliding coupling means (250b) able to support in longitudinally sliding manner said second conveyor (210b).

6. System according to any of the preceding claims, **characterized by** the fact that said guide means (310a, 320a, 310b, 320b) comprise:
- a first couple of longitudinal guides (310a, 320a) extending longitudinally along the first vertical side wall of the conveyor channel (C),
- a second couple of longitudinal guides (310b, 320b) extending longitudinally along the second vertical side wall of the conveyor channel (C).

7. System according to claim 6, **characterized by** the fact that said first couple of longitudinal guides (310a, 320a) and/or said second couple of longitudinal guides (310b, 320b) have the respective guides (310a, 320a, 310b, 320b) transversally spaced (H-300a, H-300b) to configure a longitudinal opening, and by the fact that the branch of transport (211 a, 211b) of the respective conveyor (210a, 210b) is positioned and moves longitudinally sliding within said longitudinal opening.

8. System according to any of the preceding claims, **characterized by** the fact that it further comprises an underlying transport means (10) with transport belt (11) extending longitudinally along its longitudinal axis, wherein said underlying transport means (10, 11) are able to configure the lower wall (Cf) of said conveying channel (C).

9. System according to any of the preceding claims, **characterized by** the fact that it further comprises translator means (500) which are able to transversally move said frame (100).

10. System according to any of the preceding claims, **characterized by** the fact that it further comprises a control unit which controls the two motors (M-210a , M-210b) driving the belts (211 a, 211 b) of the two conveyors (210a, 210b), and which controls the two linear actuators (400a, 400b) which are able to longitudinally move the two conveyors (210a, 210b) with respect to the support frame (100).

11. System according to any of the preceding claims, **characterized by** the fact that the linear longitudinal speed of the transport belts (211 a, 211 b) of the first (210a) and of the second (210b) conveyors is varied according to the longitudinal movements of the two conveyors (210a, 210b) with respect to the frame (100).

12. System according to any of the preceding claims, **characterized by** the fact that the linear longitudinal speed of the transport belts (211 a, 211 b) of the first (210a) and of the second (210b) conveyors is varied in relationship with the longitudinal movements of the two conveyors (210a, 210b) with respect to the frame (100), in which said speed is varied so that the longitudinal advancement speed of the transport belts (211 a, 211 b) of the first (210a) and of the second (210b) conveyors is equal with respect to the linear longitudinal advancement speed of the transport plane (11) of the underlying transport means (10).

## Patentansprüche

1. Fördersystem, das mit einem Stützrahmen (100) versehen ist und einen Förderkanal (C) aufweist, der sich entlang einer Längsachse (Y-C) erstreckt, und das eine erste längliche vertikale Seitenwand und eine zweite längliche vertikale Seitenwand aufweist und das eine erste Einlassöffnung (C-10) und eine zweite Auslassöffnung (C-20), die in Bezug auf die Einlassöffnung (C-10) in Längsrichtung des Kanals (C) beweglich ist, aufweist, **gekennzeichnet durch** die Tatsache, dass es umfasst:
- einen ersten Förderer (210a) mit Förderband (211a), wobei der erste Förderer (210a) von dem Rahmen (100) in einer in Längsrichtung beweglichen Weise in Bezug auf den Rahmen (100) gestützt ist, wobei der erste Förderer (210a) einen Abschnitt hat, der so positioniert ist, dass er eine erste aktive, fördernde, längliche, vertikale Wand für den Förderkanal (C) bildet,
- einen zweiten Förderer (210b) mit Förderband (211b), wobei der zweite Förderer (210b) von dem Rahmen (100) in einer in Längsrichtung beweglichen Weise in Bezug auf den Rahmen (100) gestützt ist, wobei der zweite Förderer (210b) einen Abschnitt hat, der so positioniert ist, dass er eine zweite aktive, fördernde, längliche, vertikale Wand für den Förderkanal (C) bildet,
- längliche Führungsmittel (310a-320a, 310b-320b), die von dem Rahmen (100) gestützt werden und die sich in Längsrichtung in Bezug auf den Kanal (C) erstrecken,
- Verschiebungsmittel (400a, 400b), die den ersten und zweiten Förderer (210a, 210b) in Bezug auf den Rahmen (100) in Längsrichtung bewegen können,
und **gekennzeichnet durch** die Tatsache, dass die Verschiebungsmittel (400a, 400b) umfassend:
- ein erstes lineares Stellglied (400a), das imstande ist, den ersten Förderer (210a) in Längsrichtung zu bewegen;
- ein zweites lineares Stellglied (400b), das imstande ist, den zweiten Förderer (210b) in Längsrichtung zu bewegen;
- wobei das erste Stellglied (400a) seine Basis (410a) mit dem Rahmen (100) verbunden hat und seinen Schaft (420a) mit dem ersten Förderer (210a) verbunden hat und
- wobei das zweite Stellglied (400b) seine Basis (410b) mit dem Rahmen (100) verbunden hat und seinen Schaft (420b) mit dem zweiten Förderer (210b) verbunden hat.

2. System nach Anspruch 1, **gekennzeichnet durch** die Tatsache, dass zur Bewegung der Auslassöffnung (C-20) in Bezug auf den Rahmen (100) der erste und der zweite Förderer (210a, 210b) in Bezug auf den Rahmen (100) in Längsrichtung bewegt werden.

3. System nach Anspruch 1 oder 2, **gekennzeichnet durch** die Tatsache, dass es einen ersten Motor (M-210a), der den ersten Förderer (210a) antreiben kann, und einen zweiten Motor (M-210b), der den zweiten Förderer (210b) antreiben kann, umfasst.

4. System nach einem der vorangehenden Ansprüche, **gekennzeichnet durch** die Tatsache, dass der erste Förderer (210a) und der zweite Förderer (210b) von dem Rahmen (100) **durch** in Längsrichtung gleitende Kopplungsmittel (250a, 250b) in Längsrichtung bewegbar gestützt werden.

5. System nach Anspruch 4, **gekennzeichnet durch** die Tatsache, dass die in Längsrichtung gleitenden Kopplungsmittel (250a, 250b) umfassen:
- ein erstes in Längsrichtung gleitendes Kopplungsmittel (250a), das den ersten Förderer (210a) in einer in Längsrichtung gleitenden Weise stützen kann,
- und ein zweites in Längsrichtung gleitendes Kopplungsmittel (250b), das den zweiten Förderer (210b) in einer in Längsrichtung gleitenden Weise stützen kann.

6. System nach einem der vorangehenden Ansprüche, **gekennzeichnet durch** die Tatsache, dass die Führungsmittel (310a, 320a, 310b, 320b) umfassen:
- ein erstes Paar von länglichen Führungen (310a, 320a), das sich in Längsrichtung entlang der ersten vertikalen Seitenwand des Förderkanals (C) erstreckt,
- ein zweites Paar von länglichen Führungen (310b, 320b), das sich in Längsrichtung entlang der zweiten vertikalen Seitenwand des Förderkanals (C) erstreckt.

7. System nach Anspruch 6, **gekennzeichnet durch** die Tatsache, dass das erste Paar von länglichen Führungen (310a, 320a) und/oder das zweite Paar von länglichen Führungen (310b, 320b) entsprechende Führungen (310a, 320a, 310b, 320b) aufweisen, die in Querrichtung beabstandet sind (H-300a, H-300b), um eine längliche Öffnung zu bilden, und **durch** die Tatsache, dass der Transportabschnitt (211a, 211b) des entsprechenden Förderers (210a, 210b) in der länglichen Öffnung positioniert ist und sich darin in Längsrichtung gleitend bewegt.

8. System nach einem der vorangehenden Ansprüche, **gekennzeichnet durch** die Tatsache, dass es ferner ein darunterliegendes Transportmittel (10) mit einem Transportband (11) umfasst, das sich in Längsrichtung entlang seiner Längsrichtung erstreckt, wobei die darunterliegenden Transportmittel (10, 11) die untere Wand (Cf) des Förderkanals (C) bilden können.

9. System nach einem der vorangehenden Ansprüche, **gekennzeichnet durch** die Tatsache, dass es ferner Verschiebungsmittel (500) umfasst, die den Rahmen (100) in Querrichtung bewegen können.

10. System nach einem der vorangehenden Ansprüche, **gekennzeichnet durch** die Tatsache, dass es ferner eine Steuereinheit umfasst, die die zwei Motoren (M-210a, M-210b) steuert, die die Bänder (211a, 211b) der zwei Förderer (210a, 210b) antreiben, und das die zwei linearen Stellglieder (400a, 400b) steuert, die die zwei Förderer (210a, 210b) in Bezug auf den Stützrahmen (100) in Längsrichtung bewegen können.

11. System nach einem der vorangehenden Ansprüche, **gekennzeichnet durch** die Tatsache, dass die lineare Längsgeschwindigkeit der Transportbänder (211a, 211b) des ersten (210a) und des zweiten (210b) Förderers gemäß den Längsbewegungen der zwei Förderer (210a, 210b) in Bezug auf den Rahmen (100) verändert wird.

12. System nach einem der vorangehenden Ansprüche, **gekennzeichnet durch** die Tatsache, dass die lineare Längsgeschwindigkeit der Transportbänder (211a, 211b) des ersten (210a) und des zweiten (210b) Förderers im Verhältnis zu den Längsbewegungen der zwei Förderer (210a, 210b) in Bezug auf den Rahmen (100) verändert wird, wobei die Geschwindigkeit so verändert wird, dass die Vorschubgeschwindigkeit in Längsrichtung der Transportbänder (211a, 211b) des ersten (210a) und des zweiten (210b) Förderers in Bezug auf die lineare Vorschubgeschwindigkeit in Längsrichtung der Transportebene (11) der darunterliegenden Transportmittel (10) gleich ist.

## Revendications

1. Système de convoyage doté d'un châssis de support (100) et configurant un canal de convoyage (C) qui s'étend le long d'un axe longitudinal (Y-C) et qui configure une première paroi latérale verticale longitudinale et une deuxième paroi latérale verticale longitudinale et qui configure une première ouverture d'entrée (C-10) et une deuxième ouverture de sortie (C-20) qui est mobile longitudinalement par rapport à l'ouverture d'entrée (C-10) du canal (C),
**caractérisé en ce qu'**il comprend :
- un premier convoyeur (210a) avec une courroie de convoyeur (211a), lequel premier convoyeur (210a) est supporté par ledit châssis (100) d'une manière mobile longitudinalement par rapport au châssis (100), ledit premier convoyeur (210a) ayant une branche positionnée pour configurer une première paroi verticale longitudinale de convoyage active pour ledit canal de convoyage (C),
- un deuxième convoyeur (210b) avec une courroie de convoyeur (211b), lequel deuxième convoyeur (210b) étant supporté par ledit châssis (100) d'une manière mobile longitudinalement par rapport au châssis (100), ledit deuxième convoyeur (210b) ayant une branche positionnée pour configurer une deuxième paroi verticale longitudinale de convoyage active pour ledit canal de convoyage (C),
- des moyens de guidage longitudinaux (310a-320a, 310b, 320b) supportés par ledit châssis (100) et qui s'étendent longitudinalement par rapport audit canal (C),
- des moyens de translation (400a, 400b) qui sont capables de déplacer longitudinalement lesdits premier et deuxième convoyeurs (210a, 210b) par rapport au châssis (100), et
**caractérisé en ce que** lesdits moyens de translation (400a, 400b) comprennent :
- un premier actionneur linéaire (400a) capable de déplacer longitudinalement ledit premier convoyeur (210a) ;
- un deuxième actionneur (400b) capable de déplacer longitudinalement ledit deuxième convoyeur (210b),
- dans lequel ledit premier actionneur linéaire (400a) a sa base (410a) associée au châssis (100) et son tronc (420a) associé au premier convoyeur (210a), et
- dans lequel ledit deuxième actionneur linéaire (400b) a sa base (410b) associée au châssis (100) et son tronc (420b) associé au deuxième convoyeur (210b).

2. Système selon la revendication 1, **caractérisé en ce que**, pour déplacer longitudinalement l'ouverture de sortie (C-20) par rapport au châssis (100), lesdits premier et deuxième convoyeurs (210a, 210b) sont déplacés longitudinalement par rapport audit châssis (100).

3. Système selon la revendication 1 ou 2, **caractérisé en ce qu'**il comprend un premier moteur (M-210a) capable d'entraîner ledit premier convoyeur (210a) et un deuxième moteur (M-210b) capable d'entraîner ledit deuxième convoyeur (210b).

4. Système selon l'une quelconque des revendications précédentes, **caractérisé en ce que** ledit premier convoyeur (210a) et ledit deuxième convoyeur (210b) sont supportés par ledit châssis (100) d'une manière mobile longitudinalement grâce à des moyens d'accouplement à glissement longitudinal (250a, 250b).

5. Système selon la revendication 4, **caractérisé en ce que** lesdits moyens d'accouplement à glissement longitudinal (250a, 250b) comprennent :
- un premier moyen d'accouplement à glissement longitudinal (250a) capable de supporter de manière à glisser longitudinalement ledit premier convoyeur (210a),
- et un deuxième moyen d'accouplement à glissement longitudinal (250b) capable de supporter de manière à glisser longitudinalement ledit deuxième convoyeur (210b).

6. Système selon l'une quelconque des revendications précédentes, **caractérisé en ce que** lesdits moyens de guidage (310a, 320a, 310b, 320b) comprennent :
- un premier couple de guides longitudinaux (310a, 320a) s'étendant longitudinalement le long de la première paroi latérale verticale du canal de convoyage (C),
- un deuxième couple de guides longitudinaux (310b, 320b) s'étendant longitudinalement le long de la deuxième paroi latérale verticale du canal de convoyage (C).

7. Système selon la revendication 6, **caractérisé en ce que** ledit premier couple de guides longitudinaux (310a, 320a) et/ou ledit deuxième couple de guides longitudinaux (310b, 320b) ont les guides (310a, 320a, 310b, 320b) respectifs espacés transversalement (H-300a, H-300b) pour configurer une ouverture longitudinale, et **en ce que** la branche de transport (211a, 211b) du convoyeur respectif (210a, 210b) est positionnée, et se déplace par glissement longitudinal, à l'intérieur de ladite ouverture longitudinale.

8. Système selon l'une quelconque des revendications précédentes, **caractérisé en ce qu'**il comprend en outre des moyens de transport sous-jacents (10) avec une courroie de transport (11) s'étendant longitudinalement le long de son axe longitudinal, dans lequel lesdits moyens de transport sous-jacents (10, 11) sont capables de configurer la paroi inférieure (Cf) dudit canal de convoyage (C).

9. Système selon l'une quelconque des revendications précédentes, **caractérisé en ce qu'**il comprend en outre des moyens de translation (500) qui sont capables de déplacer transversalement ledit châssis (100).

10. Système selon l'une quelconque des revendications précédentes, **caractérisé en ce qu'**il comprend en outre une unité de commande qui commande les deux moteurs (M-210a, M-210b) entraînant les courroies (211a, 211b) des deux convoyeurs (210a, 210b), et qui commande les deux actionneurs linéaires (400a, 400b) qui sont capables de déplacer longitudinalement les deux convoyeurs (210a, 210b) par rapport au châssis de support (100).

11. Système selon l'une quelconque des revendications précédentes, **caractérisé en ce que** la vitesse longitudinale linéaire des courroies de transport (211a, 211b) des premier (210a) et deuxième (210b) convoyeurs varie en fonction des déplacements longitudinaux des deux convoyeurs (210a, 210b) par rapport au châssis (100).

12. Système selon l'une quelconque des revendications précédentes, **caractérisé en ce que** la vitesse longitudinale linéaire des courroies de transport (211a, 211b) des premier (210a) et deuxième (210b) convoyeurs varie en rapport avec les déplacements longitudinaux des deux convoyeurs (210a, 210b) par rapport au châssis (100), dans lequel ladite vitesse varie de telle sorte que la vitesse d'avance longitudinale des courroies de transport (211a, 211b) des premier (210a) et deuxième (210b) convoyeurs soit égale compte tenu de la vitesse d'avance longitudinale du plan de transport (11) des moyens de transport sous-jacents (10).
